# EUROPÄISCHE PATENTSCHRIFT

(11) **EP 1 541 275 B1**
(45) Veröffentlichungstag und Bekanntmachung des Hinweises auf die Patenterteilung: **07.03.2007**
(21) Anmeldenummer: 03028338.6
(22) Anmeldetag: 10.12.2003
(51) Int. Cl.: B23K 26/42

(54) **Laserbearbeitungsmaschine und Verfahren mittels Laserbearbeitung**
Laser machining method and device
Méthode et dispositif de travail au laser

(43) Veröffentlichungstag der Anmeldung: 15.06.2005
(73) Patentinhaber: Trumpf Laser- und Systemtechnik GmbH, 71254 Ditzingen (DE)
(72) Erfinder: Reis, Helmut, 71229 Leonberg (DE)
(74) Vertreter: Kohler Schmid Möbus

(56) Entgegenhaltungen:
- DE-C- 19 637 465
- US-A- 5 968 380

## Beschreibung

Die Erfindung betrifft eine Laserbearbeitungsmaschine zum Fügen zweier Werkstücke, insbesondere aus einem härtbaren Stahl, mit einem Laserbearbeitungskopf und mit Werkstückaufnahmen für die Werkstücke, und ein Verfahren zum Fügen zweier Werkstücke, insbesondere aus einem härtbaren Stahl, mittels Laserbearbeitung.

Durch die DE 196 37 465 C1 ist ein Verfahren zum Laserschweißen von härtbaren Stählen bekannt geworden.

Bei der Wärmebehandlung von derartigen Stählen mit einem erhöhten Kohlenstoffgehalt (≥ 0,2 %) wandeln sich Ferrit und Perlit in eine allotrope Form eines Eisen-Kohlenstoff-Gefüges um, das man als Austenit bezeichnet. Austenit besitzt die Eigenschaft, den gesamten freien Kohlenstoff im Metall zu lösen. Wenn der Stahl langsam abgekühlt wird, findet eine Rückumwandlung des Austenits in Ferrit und Perlit statt. Erfolgt die Abkühlung dagegen rasch, kann der ehemals im Austenit problemlos gelöste Kohlenstoff infolge der fehlenden Zeit nicht mehr aus dem Gitter herausdiffundieren, ist nunmehr im Kfz-Gitter zwangsgelöst und bewirkt eine tetragonale Verzerrung, welche eine hohe innere Gefügespannung in der Fügenaht hervorruft. Diese Form des Eisen-Kohlenstoff-Gefüges wird als Martensit bezeichnet.

Es ist bekannt, dass die Umwandlung von Austenit in Martensit am Ende der Abkühlphase stattfindet und dass diese Umwandlung von einer Volumenveränderung begleitet wird, die bei zu schnellem Abkühlen zu Rissen im Metall führen kann. Zur Vermeidung dieser Rissbildung sind u. a. drei Verfahren entwickelt worden: Beim langsamen Abkühlen wird der Stahl aus dem Kühlbad genommen, wenn er die Temperatur erreicht hat, bei der sich der Martensit zu bilden beginnt. Dann lässt man ihn an der Luft weiter abkühlen. Beim Martempern wird der Stahl am gleichen Punkt aus dem Kühlbad genommen und dann in ein Bad mit gleicher Temperatur gegeben, bis er im Inneren die gleiche Temperatur angenommen hat. Anschließend lässt man den Stahl an der Luft durch den Temperaturbereich der Martensitbildung abkühlen. Dieser reicht bei den meisten Stählen von etwa 288 °C bis zur Zimmertemperatur. Beim Austempern wird der Stahl in ein Bad aus Metall oder Salz gegeben, das auf einer konstanten Temperatur gehalten wird, bei der die gewünschte Strukturveränderung stattfindet. Er verbleibt in diesem Bad, bis die Umwandlung vollständig abgelaufen ist.

Zur Vermeidung der vorgenannten Rissbildung im Bereich der Fügestelle wird durch die DE 196 37 465 C1 eine kurze Vorwärmebehandlung des Werkstücks mit einem bestimmten Satz von Parametern (Zeit, Temperatur usw.) vorgeschlagen. Die Kurzzeitwärmebehandlung kann beispielsweise mittels Induktionserwärmung durchgeführt werden. Dabei wird das Werkstück durch eine Kurzzeitwärmebehandlung im Bereich der Fügestelle erwärmt. Mithilfe der Vorwärmung wird eine geringe Abkühlgeschwindigkeit an der Fügestelle erzielt.

Der Anmelder hat sich die Aufgabe gestellt, eine möglichst einfach aufgebaute Laserbearbeitungsmaschine bereitzustellen, welche die Möglichkeit einer Vorwärmung des Werkstücks besitzt.

Die Aufgabe wird durch eine Laserbearbeitungsmaschine zum Fügen zweier Werkstücke, insbesondere aus einem härtbaren Stahl, mit einem Laserbearbeitungskopf und mit Werkstückaufnahmen für die Werkstücke gelöst, welche Mittel zur Relativbewegung der Werkstücke zur Erzeugung einer zur Vorwärmung der Fügeflächen nutzbaren Reibungswärme aufweist.

Der wesentliche Gedanke der Erfindung besteht darin, die bei einer Laserbearbeitungsmaschine vorhandenen Werkstückaufnahmen zur Erzeugung von Wärme mittels Reibung zu nutzen. Durch eine Drehbewegung zumindest eines der beiden Fügepartner (der andere Fügepartner verweilt beispielsweise ruhig oder wird in Gegenrichtung gedreht) werden die Fügeflächen vorgewärmt.

Im Gegensatz zu dem beispielsweise durch die DE 38 28 635 A1 bekannten Verfahren des Reibschweißens wird eine Erwärmung erfindungsgemäß an den Fügeflächen der Werkstücke nur bis zu der notwendigen Vorwärmtemperatur durchgeführt. Beim Reibschweißen werden die Bauteile durch Spannvorrichtungen gegeneinander gedrückt und gedreht; durch die Reibung werden die Bauteile bis auf die Schweißtemperatur erhitzt. Die verschweißten Werkstücke weisen i.d.R. einen Wulst auf, der durch den Stauchdruck der Spannvorrichtungen entsteht und nur durch aufwändige Nacharbeit zu beseitigen ist.

Durch die Erfindung können die Fügeflächen homogen erwärmt werden. Verformungen wie beim Reibschweißen können nicht auftreten. Durch die Durchführung der Vorwärmung ohne zusätzliche Maschinenteile, d.h. den Zugriff auf vorhandene Maschinenteile, wird die Bauweise der Laserbearbeitungsmaschine nicht aufwändiger und die Laserbearbeitungsmaschine verteuert sich nicht in der Herstellung.
Zur Überwachung der Temperatur der Fügeflächen ist ein Sensor vorteilhaft.

Die oben genannte Aufgabe wird auch durch ein Verfahren zum Fügen zweier Werkstücke, insbesondere aus einem härtbaren Stahl, mittels Laserbearbeitung gelöst, bei dem eine Relativbewegung der Werkstücke gegeneinander zur Erzeugung einer zur Vorwärmung der Fügeflächen genutzten Reibungswärme durchgeführt wird. Durch die Nutzung der Reibungswärme kann auf teure Einrichtungen zur Erwärmung der Fügeflächen verzichtet werden.

Wenn die Relativbewegung mithilfe der Werkstückaufnahmen der Laserbearbeitungsmaschine durchgeführt wird, sind separate Einrichtungen zur Erwärmung der Fügeflächen nicht erforderlich.

Bevorzugt ist es, dass die Fügeflächen auf eine überwachte Solltemperatur erwärmt werden und dass die Werkstücke synchron auf eine für den Schweißvorgang geeignete Geschwindigkeit gebracht und anschließend mithilfe des Laserstrahls verschweißt werden.

Die Erfindung ist bei Stählen oder Werkstoffkombinationen mit ähnlichem Härteverhalten beim Abkühlen einsetzbar, bei denen das Vorwärmen vor der Laserbearbeitung sinnvoll ist (z.B. Bauteile aus dem KFZ-Antriebsbau).

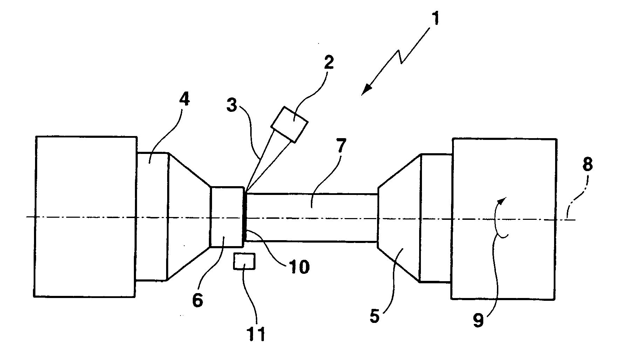

Ein Ausführungsbeispiel der Erfindung ist in der Zeichnung schematisch dargestellt und wird nachfolgend mit Bezug zur Figur der Zeichnung näher erläutert. Die einzige **Figur** zeigt:
eine Ansicht von Teilen einer Laserbearbeitungsmaschine zum Fügen zweier Werkstücke.

Aus der **Figur** ist ersichtlich, dass eine Laserbearbeitungsmaschine **1** neben weiteren in der Figur nicht gezeigten Maschinenteilen einen Laserbearbeitungskopf **2** zum Erzeugen eines Laserstrahls **3** sowie zwei Werkstückaufnahmen **4** und **5** umfasst.

Die zu fügenden rotationssymmetrischen Werkstücke **6** und **7** aus einem härtbaren kohlenstoffhaltigen Stahl werden in den durch Spannfutter ausgebildeten Werkstückaufnahmen 4 und 5 gehalten. Das Werkstück 6 wird um eine Längsachse **8** in Rotation (siehe Pfeil **9**) versetzt und gegen das entweder ruhende oder gegenläufig drehende Werkstück 7 gepresst. Durch die entstehende Reibungswärme wird eine Fügestelle **10** erwärmt. Nach Erreichen der durch einen Sensor **11** erfassten Zieltemperatur werden beide Werkstücke 6 und 7 synchron auf eine für den Schweißvorgang geeignete Geschwindigkeit gebracht und anschließend mithilfe des Laserstrahls 3 verschweißt.

Die vor dem Fügen an der Fügestelle 10 eingebrachte Wärme verhindert ein zu schnelles Abkühlen der Schweißnaht, so dass eine Martensitbildung und dadurch entstehende Spannungen in der Schweißnaht reduziert werden.

### BEZUGSZEICHENLISTE

- 1: Laserbearbeitungsmaschine
- 2: Laserbearbeitungskopf
- 3: Laserstrahl
- 4: Werkstückaufnahme
- 5: Werkstückaufnahme
- 6: Werkstück
- 7: Werkstück
- 8: Längsachse
- 9: Drehrichtung
- 10: Schweißnaht
- 11: Sensor

## Patentansprüche

1. Laserbearbeitungsmaschine (1) zum Fügen zweier Werkstücke (6, 7), insbesondere aus einem härtbaren Stahl, mit einem Laserbearbeitungskopf (2) und mit Werkstückaufnahmen (4, 5) für die Werkstücke (6, 7), **dadurch gekennzeichnet, dass** Mittel zur Relativbewegung der Werkstücke (6, 7) zur Erzeugung einer zur Vorwärmung der Fügeflächen nutzbaren Reibungswärme vorgesehen sind.

2. Laserbearbeitungsmaschine nach Anspruch 1, **dadurch gekennzeichnet, dass** die Werkstückaufnahmen (6, 7) zur Erzeugung einer Relativbewegung zwischen den Werkstücken (6, 7) einsetzbar sind.

3. Laserbearbeitungsmaschine nach Anspruch 1 oder 2, **dadurch gekennzeichnet, dass** die Laserbearbeitungsmaschine (1) einen Sensor (11) zur Temperaturerfassung der Werkstücke (6, 7) im Bereich der Fügenaht (10) aufweist.

4. Verfahren zum Fügen zweier Werkstücke (6, 7), insbesondere aus einem härtbaren Stahl, mittels Laserbearbeitung, **dadurch gekennzeichnet, dass** eine Relativbewegung der Werkstücke (6, 7) gegeneinander zur Erzeugung einer zur Vorwärmung der Fügeflächen nutzbaren Reibungswärme durchgeführt wird.

5. Verfahren nach Anspruch 4, **dadurch gekennzeichnet, dass** die Relativbewegung mithilfe der Werkstückaufnahmen (4, 5) der Laserbearbeitungsmaschine (1) durchgeführt wird.

6. Verfahren nach Anspruch 4 oder 5, **dadurch gekennzeichnet, dass** die Fügeflächen auf eine überwachte Solltemperatur erwärmt werden und dass die Werkstücke synchron auf eine für den Schweißvorgang geeignete Geschwindigkeit gebracht und anschließend mithilfe des Laserstrahls verschweißt werden.

## Claims

1. Laser processing machine (1) for joining two workpieces (6, 7), in particular, of a hardenable steel, comprising a laser processing head (2) and workpiece receptions (4, 5) for the workpieces (6, 7), **characterized in that** means are provided for a relative motion of the workpieces (6, 7) to generate frictional heat which can be used to preheat the joining surfaces.

2. Laser processing machine according to claim 1, **characterized in that** the workpiece receptions (6, 7) can be used to generate a relative motion between the workpieces (6, 7).

3. Laser processing machine according to claim 1 or 2, **characterized in that** the laser processing machine (1) comprises a sensor (11) to detect the temperature of the workpieces (6, 7) in the region of the welding seam (10).

4. Method for joining two workpieces (6, 7), in particular of hardenable steel, using laser processing, **characterized in that** the workpieces (6, 7) are moved relative to each other in opposite directions to generate frictional heat which can be utilized to preheat the joining surfaces.

5. Method according to claim 4, **characterized in that** the relative motion is performed by means of the workpiece receptions (4, 5) of the laser processing machine (1).

6. Method according to claim 4 or 5, **characterized in that** the joining surfaces are heated to a controlled desired temperature, and the workpieces are synchronously brought to a speed which is suitable for the welding process, and are subsequently welded using the laser beam.

## Revendications

1. Machine de traitement par laser (1) servant à l'assemblage de deux pièces (6, 7), en particulier en acier durcissable, comprenant une tête de traitement par laser (2) et comprenant des porte-pièces (4, 5) pour les pièces (6, 7), **caractérisé en ce qu'**il est prévu des moyens permettant le mouvement relatif des pièces (6, 7) afin de produire une chaleur de friction utilisable pour le préchauffage des surfaces d'assemblage.

2. Machine de traitement par laser selon la revendication 1, **caractérisé en ce que** les porte-pièces (4, 5) sont utilisables pour produire un mouvement relatif entre les pièces (6, 7).

3. Machine de traitement par laser selon la revendication 1 ou 2, **caractérisé en ce que** la machine de traitement par laser (1) présente un capteur (1) pour la saisie de la température des pièces (6, 7) au niveau du joint d'assemblage (10).

4. Procédé d'assemblage de deux pièces (6, 7), en particulier en acier durcissable, au moyen d'un traitement par laser, **caractérisé en ce que** l'on effectue un mouvement relatif des pièces (6, 7) l'une contre l'autre afin de produire une chaleur de friction utilisable pour le préchauffage des surfaces d'assemblage.

5. Procédé selon la revendication 4, **caractérisé en ce que** le mouvement relatif est réalisé à l'aide des porte-pièces (4, 5) de la machine de traitement par laser (1).

6. Procédé selon la revendication 4 ou 5, **caractérisé en ce que** les surfaces d'assemblage sont chauffées à une température de consigne surveillée et que les pièces sont amenées de manière synchrone à une vitesse convenant au soudage et ensuite soudées à l'aide du faisceau laser.
